# DEMANDE DE BREVET EUROPEEN

(11) **EP 2 273 757 A1**
(43) Date de publication de la demande: **12.01.2011**
(21) Numéro de dépôt: 09305596.0
(22) Date de dépôt: 24.06.2009
(51) Int. Cl.: H04L 29/08, G06Q 20/00, H04W 12/06, H04W 88/02

(54) **Procédé de configuration à distance d'un terminal mobile d'un réseau de télécommunications**

(71) Demandeur: Gemalto SA, 92190 Meudon (FR)
(72) Inventeur: Fine, Jean-Yves, 13006 Marseille (FR); Botuha, Stéphane, 83140 Six Fours les plages (FR)

(57) **Abrégé**

L'invention concerne un procédé de configuration à distance d'un terminal mobile d'un réseau de télécommunications (11), appelé premier terminal (T1).
Selon l'invention, le procédé consiste à:
- transmettre par une liaison sans contact, à partir d'un autre terminal mobile, appelé deuxième terminal (T2) une commande de configuration (10) du premier terminal (T1);
- authentifier le deuxième terminal (T2) au niveau du premier terminal (T1) et, en cas d'authentification positive, interdire l'exécution d'une fonction par le premier terminal (T1).

## Description

Le domaine de l'invention est celui des réseaux de télécommunications, notamment celui des terminaux mobiles utilisés dans de tels réseaux.

Plus précisément, la présente invention concerne un procédé de configuration à distance d'un terminal mobile d'un réseau de télécommunications.

De manière connue, il est possible de configurer à distance un terminal mobile d'un réseau de télécommunications, tel un terminal de type GSM par exemple. Cette configuration est initiée par l'opérateur du réseau, classiquement par OTA (« Over The Air » en anglais). Des commandes OTA transmises depuis l'infrastructure du réseau vers un ou plusieurs terminaux mobiles permettent ainsi de charger des applications dans les terminaux, de modifier leurs configurations en leur accordant ou restreignant des droits, d'y télécharger des données, etc...

Comme l'opérateur du réseau a le contrôle et le pouvoir décisionnaire d'envoyer ou non des commandes OTA, il n'est pas possible de configurer un terminal mobile à distance à partir d'un autre terminal mobile. Ce besoin se présente notamment dans le cas où un enfant détient un terminal mobile et où ses parents, par exemple, veulent pouvoir contrôler l'utilisation de ce terminal mobile par l'enfant, par exemple en limitant le nombre de SMS pouvant être envoyés ou en n'autorisant l'appel que de certains numéros de téléphone prédéfinis, sans avoir à demander à l'opérateur du réseau auquel est attaché le terminal de l'enfant d'effectuer ce contrôle.

A cet effet, l'invention propose un procédé conforme à la revendication 1.

Selon un mode de mise en oeuvre préférentiel, la fonction interdite d'exécution est l'une des suivantes :
- l'envoi ou la réception de SMS par le premier terminal ;
- l'émission ou la réception d'appels par le premier terminal ;
- l'appel de certains numéros par le premier terminal ;
- l'utilisation d'applications WAP par le premier terminal ;
- le paiement par liaison NFC.

Réciproquement, le procédé selon l'invention consiste également à :
- transmettre par la liaison sans contact, à partir du deuxième terminal, une commande de configuration du premier terminal ;
- authentifier le deuxième terminal au niveau du premier terminal et, en cas d'authentification positive, autoriser l'exécution d'une fonction par le premier terminal.

Avantageusement, le procédé selon l'invention consiste préalablement à :
- demander, par la liaison sans contact, du premier terminal au deuxième terminal, une autorisation de paiement d'un bien ou d'un service pour un montant supérieur à celui d'un montant prédéfini ;
- authentifier le premier terminal au niveau du deuxième terminal et, en cas d'authentification positive, et après accord du détenteur du deuxième terminal, autoriser le paiement par le premier terminal.

Préférentiellement, la liaison sans contact est une liaison OTA.

Dans un mode de mise en oeuvre avantageux, les premier et deuxième terminaux comportent des éléments sécurisés de type carte SIM dans lesquels résident des applications permettant la mise en oeuvre du procédé.

Préférentiellement, les authentifications sont réalisées en comparant les numéros d'IMSI des cartes SIM.

D'autres caractéristiques et avantages de l'invention apparaîtront à la lecture suivante de deux modes de mise en oeuvre avantageux de l'invention, donnés à titre illustratif et non limitatif, et des figures annexées dans lesquelles :
- la figure 1 représente schématiquement le procédé selon l'invention ;
- la figure 2 représente schématiquement le procédé selon l'invention appliqué à un contrôle de paiement ;
- la figure 3 montre un exemple d'implémentation du contrôle de paiement dans une carte UICC.

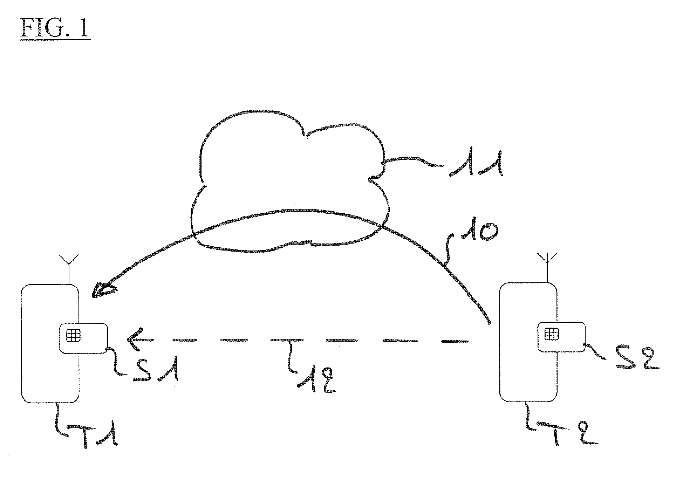

La figure 1 représente schématiquement le procédé selon l'invention.

Comme précédemment énoncé, l'invention a pour objectif de configurer à distance un terminal mobile d'un réseau de télécommunications. Ce terminal est référencé T1 et appelé premier terminal.

Selon l'invention, un autre terminal mobile, référencé T2 et appelé deuxième terminal, transmet par une liaison sans contact une commande de configuration du premier terminal T1. Le deuxième terminal T2 est donc celui qui contrôle les fonctionnalités du premier terminal T1. La transmission de la commande s'effectue selon la description du procédé qui va suivre.

Deux modes de mise en oeuvre sont représentés dans la figure 1 :
i - dans un premier mode de mise en oeuvre, le deuxième terminal T2 envoie au premier terminal T1 une commande 10 de configuration via le réseau de télécommunications 11. La transmission de cette commande s'effectue en composant le numéro de téléphone du premier terminal T1. Le réseau 11 comporte l'infrastructure habituelle d'un tel réseau, à savoir notamment des BTS, des MSC et des BSC. Le réseau 11 retransmet la commande 10 au premier terminal T1. Le terminal T1 comprend une application embarquée destinée à reconnaître la commande 10 et à l'exécuter. La commande 10 se présente par exemple sous la même forme qu'une commande OTA provenant du réseau 11. Avant l'exécution de la commande, l'application, préférentiellement embarquée dans la carte SIM S1 du terminal T1, authentifie le deuxième terminal T2 et, en cas d'authentification positive, interdit l'exécution d'une fonction par le premier terminal T1. Cette authentification consiste par exemple à comparer le numéro d'IMSI de la carte SIM du deuxième terminal T2 avec des numéros pré-enregistrés dans la carte S1. Si le numéro d'IMSI de l'émetteur de la commande 10 est reconnu dans cette liste, l'authentification est positive, c'est-à-dire que le terminal T2 est bien en droit de configurer le terminal T1. Plusieurs terminaux peuvent à cet égard être autorisés à contrôler les fonctionnalités du premier terminal T1, par exemple celui du père de l'enfant détenant le premier terminal T1, celui de la mère et ceux des grands-parents.
   L'appairage des terminaux T1 et T2 peut être réalisé de différentes manières : le terminal T2 peut demander à l'opérateur du réseau de télécommunications 11 d'envoyer des applications dans les cartes Sims S1 et S2 des terminaux T1 et T2 afin d'autoriser le terminal T2 d'envoyer des commandes au terminal T1 et de permettre au terminal T1 d'authentifier le terminal T2 lorsqu'il reçoit une commande de configuration. Il est également envisageable d'acheter des cartes Sims S1 et S2 préalablement appairées.
   L'interdiction d'exécution d'une fonction peut prendre diverses formes. Elle peut notamment consister à :
   - limiter ou interdire l'envoi ou la réception de SMS par le premier terminal T1 ;
   - limiter ou interdire l'émission ou la réception d'appels par le premier terminal T1 ;
   - interdire l'appel de certains numéros par le premier terminal T1, par exemple des appels vers des numéros surtaxés ;
   - limiter ou interdire l'utilisation d'applications WAP par le premier terminal T1 ;
   - limiter ou interdire le paiement de biens ou services par liaison NFC.
   Cette fonctionnalité sera décrite plus en avant par la suite.
ii - dans un deuxième mode de mise en oeuvre, le deuxième terminal T2 envoie au premier terminal T1 une commande 12 de configuration via une liaison NFC, Bluetooth, Wifi ou infra-rouge par exemple. La commande de configuration ne passe alors plus par le réseau de télécommunications 11, la liaison entre T1 et T2 étant directe.

Réciproquement, il est possible de transmettre au premier terminal T1 par la liaison sans contact (via le réseau 11 ou par liaison directe), à partir du deuxième terminal T2, une commande de configuration du premier terminal T1 autorisant celui-ci à exécuter une fonction préalablement limitée ou interdite. Après authentification du terminal T2 au niveau du terminal T1, l'exécution de la fonction visée est autorisée. Tel que mentionné précédemment, cette autorisation peut concerner :
- l'envoi ou la réception de SMS par le premier terminal T1;
- l'émission ou la réception d'appels par le premier terminal T1;
- l'appel de certains numéros par le premier terminal T1;
- l'utilisation d'applications WAP par le premier terminal T1;
- un paiement d'un bien ou d'un service par liaison NFC par le premier terminal T1.

La sélection de la commande transmise du terminal T2 au terminal T1 est préférentiellement réalisée en sélectionnant dans un menu déroulant, après sélection de l'application de contrôle dans le terminal T2, une ou plusieurs fonctions que l'utilisateur du terminal T2 désire autoriser, interdire ou limiter au niveau du terminal T1. Cette sélection est par exemple réalisée en sélectionnant des cases à cocher dans le menu déroulant. Après avoir réalisé ces étapes, l'utilisateur envoie la commande au terminal T1, laquelle comprend également un identifiant du terminal T2 (IMEI ou MSISDN) ou de la carte amovible S2 (IMSI ou CCID) du terminal T2.

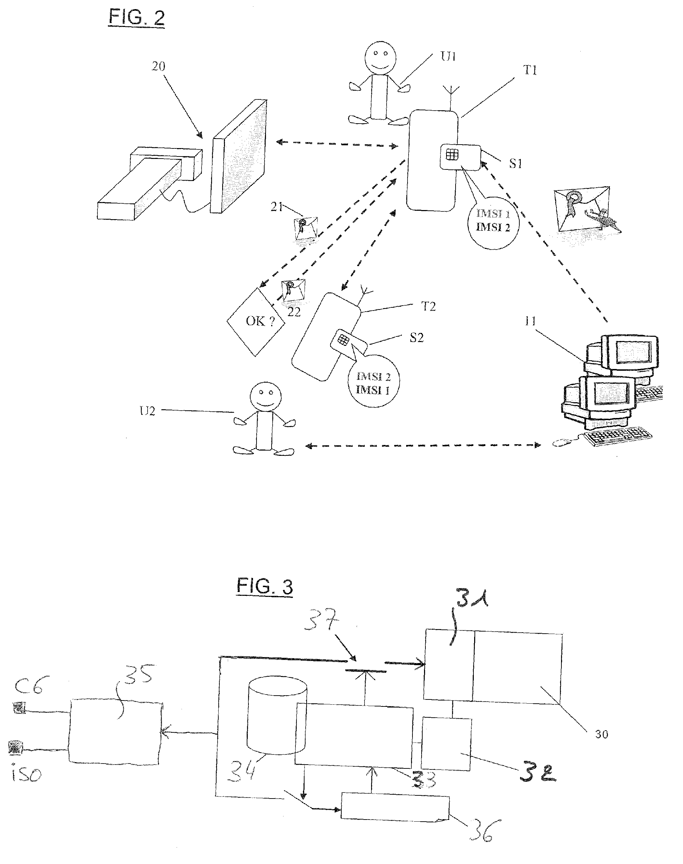

La figure 2 représente schématiquement le procédé selon l'invention appliqué à un contrôle de paiement.

On se place ici dans le cadre d'une transaction NFC qu'un utilisateur U1 souhaite effectuer à l'aide de son terminal mobile T1 renfermant une carte Sim S1. La transaction NFC correspond à un paiement auprès d'un commerçant, d'un bien ou d'un service, à l'aide d'une borne de lecture sans contact 20. La carte Sim S1 renferme une application NFC ainsi qu'un mécanisme de contrôle conforme à la présente invention.

Un cas typique d'application de la présente invention est le suivant : lorsque l'utilisateur U1 approche son terminal mobile T1 de la borne 20, le mécanisme de contrôle conforme à la présente invention détecte que le montant de la transaction est supérieur à un montant autorisé prédéfini. Il s'agit par exemple d'une somme de 20 Euros pour un montant de transaction de 50 Euros. Ce montant maximal de transaction prédéfini a par exemple été autorisé préalablement par un utilisateur 2 via le terminal T2 selon la procédure décrite en référence à la figure 1.

Le mécanisme de contrôle envoie alors par voie OTA (typiquement un SMS) une demande d'autorisation 21 du paiement de la somme de 50 Euros au terminal T2. A la réception de la demande et après authentification du terminal T1 au niveau du terminal T2, l'utilisateur U2 peut choisir d'accepter ce paiement ou de le refuser. En cas de refus, la procédure prend fin. Dans le cas contraire, si l'utilisateur U2 donne son accord pour cette transaction dépassant le montant alloué, un message d'acquiescement 22 (SMS) est envoyé au terminal T1. Le paiement du montant de 50 Euros est alors autorisé auprès de la borne 20 par le mécanisme de contrôle. Les SMS échangés pendant cette procédure sont, de manière connue, sécurisés.

Selon une alternative, après réception de la demande d'autorisation 21 et authentification du terminal T1, le terminal T2 peut contacter le réseau de télécommunications 11 qui autorise, via OTA, l'exécution de la transaction NFC.

Bien que les exemples donnés ci-dessus ont été donnés dans le cadre d'un réseau de type GSM, l'invention s'applique à tout type de réseau de radiocommunication, par exemple également aux réseaux UMTS et 3G.

A cet égard, la figure 3 montre un exemple d'implémentation du contrôle de paiement dans une carte UICC. Une telle carte UICC est comprise dans un terminal mobile contrôlé de type 3G.

La carte comprend une puce dans laquelle est installée une application bancaire 30, par exemple par OTA comme mentionné précédemment. Cette application bancaire peut être la même que celle installée dans des cartes bancaires classiques, c'est-à-dire que son code est inchangé. Un adaptateur 31 coopère avec l'application bancaire 30 pour gérer par exemple l'accès à l'application 30 par contrôle d'un code PIN ou la sélection de l'application 30 parmi plusieurs (non représentées).

La carte comprend également un contrôleur de transaction 33 associé à une base de données 34 contenant les identifiants des terminaux T2 ayant le droit de contrôler le terminal mobile T1 renfermant la carte représentée. La base de données 34 contient typiquement les IMSIs des cartes S2 des terminaux T2 ayant le droit de contrôler le terminal mobile T1.

Le fonctionnement du dispositif est le suivant :

Un dispatcheur d'APDU 35 détecte sur quel canal de communication du terminal mobile est reçu un signal de commande. Ces canaux sont typiquement un canal C6 correspondant à un canal NFC et un canal ISO correspondant à un canal OTA. A la réception d'une commande contenant des paramètres de contrôle, le contrôleur de transaction 33 vérifie l'identifiant originaire de la commande. Si celui-ci est reconnu, le contrôleur de transaction 33 autorise l'accès en écriture à un registre 36 contenant des paramètres de contrôle. Les paramètres de contrôle compris dans la commande sont alors inscrits dans le registre 36. Il s'agit par exemple du montant de 20 Euros mentionné précédemment.

Lorsque l'utilisateur du terminal T1 décide d'effectuer une transaction NFC, conformément à la figure 2, il approche son terminal de la borne de lecture 20. Le contrôleur de transaction vérifie si le montant de la transaction est supérieur au paramètre stocké dans le registre 36. Si le montant de la transaction est inférieur à ce paramètre, il autorise la transaction en fermant un interrupteur 37. Le port NFC C6 est alors relié à l'application bancaire 30. Dans le cas contraire, la transaction est interdite et l'interrupteur 37 est ouvert.

Une interface homme-machine 32, typiquement un écran coopérant avec un clavier, sert au pilotage des transactions par l'utilisateur et à informer l'utilisateur de l'état d'avancement de la transaction.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé de configuration à distance d'un terminal mobile d'un réseau de télécommunications, appelé premier terminal (T1), **caractérisé en ce qu'**il consiste à :
- transmettre par une liaison sans contact, à partir d'un autre terminal mobile, appelé deuxième terminal (T2), une commande de configuration dudit premier terminal (T1) ;
- authentifier ledit deuxième terminal (T2) au niveau dudit premier terminal (T1) et, en cas d'authentification positive, interdire l'exécution d'une fonction par ledit premier terminal (T1).

2. Procédé selon la revendication 1, **caractérisé en ce que** ladite fonction est l'une des suivantes :
- l'envoi ou la réception de SMS par ledit premier terminal (T1) ;
- l'émission ou la réception d'appels par ledit premier terminal (T1) ;
- l'appel de certains numéros par ledit premier terminal (T1) ;
- l'utilisation d'applications WAP par ledit premier terminal (T1) ;
- le paiement par liaison NFC.

3. Procédé selon l'une des revendications 1 et 2, **caractérisé en ce qu'**il consiste réciproquement à :
- transmettre par ladite liaison sans contact, à partir dudit deuxième terminal (T2), une commande de configuration dudit premier terminal (T1) ;
- authentifier ledit deuxième terminal (T2) au niveau dudit premier terminal (T1) et, en cas d'authentification positive, autoriser l'exécution d'une fonction par ledit premier terminal (T1).

4. Procédé selon l'une des revendications 1 à 3, **caractérisé en ce qu'**il consiste préalablement à :
- demander, par ladite liaison sans contact, dudit premier terminal (T1) audit deuxième terminal (T2), une autorisation de paiement d'un bien ou d'un service pour un montant supérieur à celui d'un montant prédéfini ;
- authentifier ledit premier terminal (T1) au niveau dudit deuxième terminal (T2) et, en cas d'authentification positive, et après accord du détenteur dudit deuxième terminal (T2), autoriser ledit paiement par ledit premier terminal (T1).

5. Procédé selon l'une des revendications 1 à 4, **caractérisé en ce que** ladite liaison sans contact est une liaison OTA.

6. Procédé selon l'une des revendications 1 à 5, **caractérisé en ce que** lesdits premier et deuxième terminaux comportent des éléments sécurisés de type carte SIM dans lesquels résident des applications permettant la mise en oeuvre dudit procédé.

7. Procédé selon la revendication 6, **caractérisé en ce que** lesdites authentifications sont réalisées en comparant les numéros d'IMSI desdites cartes SIM.
